# EUROPEAN PATENT SPECIFICATION

(11) **EP 2 008 553 B1**
(45) Date of publication and mention of the grant of the patent: **13.10.2010**
(21) Application number: 07111228.8
(22) Date of filing: 28.06.2007
(51) Int. Cl.: A47J 31/40, B65D 51/20, G07F 11/44, G07F 13/06

(54) **Container for storing and unloading bulk material**
Container zur Lagerung und Entladung von Schüttgut
Récipient pour le stockage et le déchargement de matériaux en vrac

(43) Date of publication of application: 31.12.2008
(73) Proprietor: Nestec S.A., 1800 Vevey (CH)
(72) Inventor: Kernkamp, Michiel, 655 - 0872 Kobe (JP); Jaggy, Peter, 657 0015 Kobe (JP)
(74) Representative: Ducreux, Marie

(56) References cited:
- EP-A- 0 343 090
- EP-A- 0 350 128
- EP-A- 0 408 217
- EP-A- 0 434 168
- EP-A- 0 442 433
- EP-A- 1 453 018
- WO-A-02/081308
- US-A- 3 938 639
- US-A1- 2003 074 868

## Description

The present invention relates to a container for storing and unloading a bulk material in a tank. More particularly, the invention relates to a container for refilling a coffee powder tank.

Various automated beverage machines for making hot or cold beverage products are known in the art. In a conventional beverage machine, a metered amount of watersoluble beverage powder, stored in powder refillable tank, and a metered amount of hot or cold water, supplied from a water source, is conveyed into a mixing chamber to produce a beverage or food, which is then dispensed into a cup and served. The refilling of tanks consists in pouring the powder from disposable powder bag type packages for example gusset bags with ripper for re-open and re-close. During this operation, the operator encounters several problems. The first one concerns a significant loss of powder during the transfer of the powder from the refilling bag to the tank to be refilled. As a consequence a certain quantity of powder is loss and there is also an important dusting of the coffee machine by the powder that has fallen out of the tank. A periodic cleaning of the machine is rendered necessary to avoid a dirty look to the machine as well as to avoid hygiene problems. An other problem is due to the contact and stirring of the powder with air when it flows from one container to the other : it can create a problem of hygiene due to possible contamination with the outside environment, especially, when air and water sensitive powders are used. Moreover, the contact and stirring generally cause a loss of aroma of the transferred coffee powder in air. Lastly, this mixing of dry powder, which can be a highly hygroscopic material, can lead to the formation of lumps and cakes that prevent gravity flow and transport of the powder inside the machine.

There exist also problems relative to the disposable containers used to refill the coffee machine tanks. One problem is linked to the fact that the machines are often tuned in order to provide the best coffee beverage with a specific coffee powder. An error in the type of coffee powder to be refilled in the machine would then lead to a less quality beverage disappointing the consumer. It would be appreciable to provide containers specifically adapted to a type of machine so as to guarantee the best beverage dispensing. An other problem is the necessity to provide the consumers with light weight disposable containers for their shopping.

The document EP 434 168 proposes a powder container connectable to a beverage preparation machine. This container cannot be disconnected from the machine for being refilled and reconnected to the machine because the means for engaging the container in the machine are irreversible and breakable from the container when the container is removed from the machine. Consequently the container cannot be connected a second time to the machine after it has been refilled.

Therefore, there is need for a satisfactory container, especially for use as a small food or beverage dispensing machine for an office or home, that would allow the refilling of such a machine with a flowable substance from a convenient removable package with a high level of cleanliness and with limited contact with atmosphere. In particular, there does not exist a powder refillable container that can be adapted in a quick, clean and effective manner to a tank or directly in the machine.

The present invention now resolves these deficiencies.

In a first aspect, the invention relates to a container for storing and unloading bulk material comprising :
- a vessel presenting a closed extremity and an opened extremity,
- a hopper tapering to a discharge outlet, and
- a pierceable cover closing the extremity of the discharge outlet and the opened extremity of the vessel.

The present invention provides a container for a bulk material like granulates, granules, grains, powders, ... in a closed way in order to store, transport and sell this bulk material and then in order to easily unload this bulk material from the container to a machine or the tank designed to be filled by this bulk material.

The container of the present invention comprises mainly a vessel with a closed extremity and an opened extremity ; its function is to receive and store the bulk material. Any shape of vessel could be used. In a preferred embodiment of the present invention the vessel is a cylinder, this form enabling easy handling and easy manufacturing. This vessel can be made of at least a material chosen between : plastic, cardboard paper, aluminium or a mixture and/or laminate of the materials. The preferred material is a laminate of sheets of paper, polyethylene, aluminium, polyethylene terephthalate and polyethylene according to this order. These materials are preferred as they lead to a low weight vessel, yet any other materials could be used to make the vessel. These materials should present a good humidity barrier and, optionally, good oxygen barrier. In a special embodiment the closed extremity of the vessel can be at least partially transparent by using for example a transparent plastic. Such a transparent extremity enables the control the level of the remaining bulk material inside the container when this one is used.

The container of the present invention comprises a hopper of which function is to enable the unloading of the bulk material from the vessel outside of the container. This hopper or funnel-shaped receptacle enables the bulk material to pass by gravity into a receptacle placed at the opened extremity of the vessel. The hopper is placed inside the vessel and close by the opened extremity of the vessel. The hopper can be welded to the inside face of the vessel. The hopper tapers to a discharge outlet that faces the opened extremity of the vessel. According to a preferred embodiment of the present invention, the hopper is placed inside the vessel so that the extremity of the discharge outlet and the opened extremity of the vessel are placed in the same plan. This common plan is usually perpendicular to the main axis of the vessel. The tapering angle of the hopper may depend from the nature and the granulometry of the bulk material. For a hydrosoluble coffee powder, the hopper preferably presents a tapering angle α of at least 20°, preferably comprised between 40 and 45°. According to a preferred embodiment, the hopper has a frusto-conical shape. In one mode of the present invention, the discharge outlet may simply be the end of the hopper and in an other mode of the present invention, the discharge outlet maybe be a specific device coupled to the end of the hopper, preferably a cylinder. In this last mode, the discharge outlet corresponds to the end of the cylinder that is not coupled to the hopper and this end is placed in the same plan as the opened extremity of the vessel. The sections of the discharge outlet and the vessel opened extremity present generally symmetrical forms and have the same centre of symmetry. In the preferred embodiment of the present invention, the discharge outlet presents a circular section and the vessel opened extremity presents a circular section too, both circular sections presenting the same centre. The hopper is preferably made of plastic like poly...

Lastly the container of the present invention comprises a pierceable cover that closes the extremity of the discharge outlet and the opened extremity of the vessel. This pierceable cover aims at closing the container when it stores the bulk material. That pierceable cover closes simultaneously the opened extremity of the vessel and the discharge outlet placed in the same plan. The cover is then placed in this specific plan common to the opened extremity of the vessel and the discharge outlet. In the preferred embodiment of the present invention, the cover is pierceable by exercising a contact pressure on its surface. Such a pierceable function can be obtained by making small perforations through the cover that would enable the tear of the cover. Then the cover can present tear lines. It has been proved that when tear lines are straight lines intersecting at the centre of the cover better opening of the cover is obtained and better unloading of the bulk material is possible. The cover may be made of any material that is pierceable, this can be at least a material chosen between : paper, aluminium and polymer sheets. The preferred membrane is a laminate of sheets of paper, polyethylene, aluminium and polyethylene according to this order.

The container may comprise a protection cap above the pierceable cover. This cap enables the protection of the pierceable cover during the transport of the container.

The different elements of the container may be connected by permanent or detachable means. Permanent means may be designed to be sealing, welding, bonding, non-reversible clipping means, etc means. Detachable means may mean a container formed of a threaded portion or equivalent complementary mechanical engagement means on one of the elements of the container which collaborate with a threaded portion or complementary mechanical engagement means belonging to an other element of the container.

According to the preferred embodiment of the present invention, the container is full of coffee powder. Yet, this type of container may be used for the storing and unloading of any other bulk material either in food or non food area. Food material may be any food concentrate intended to reconstitute a hot or cold, frothy or non-frothy drink. For example, the bulk material may be a powder of soluble milk, coffee, cocoa, tea or a combination thereof. Other powdered foods such as dried mashed potatoes or other dried foods, sauce or gravy powders, soup powders or the like may also be used in this invention.

The filling of the vessel part of the container of the present invention with the bulk material to be stored inside is generally realised on the container of which closed extremity has not yet been closed but for which all the other elements (hopper, cover, eventually protection cap) are already present and assembled. Once the bulk material has been filled inside, the vessel is closed in a definitive way at its closed extremity.

Once the container of the present invention has been used, the protection cover is pierced to unload the bulk material and the container can no more be used. The container is disposed when it is empty.

In a second aspect, the present invention concerns a tank for storing bulk material and susceptible to be refilled by a container according to the present invention, said tank presenting refilling opening presenting means for piercing the pierceable cover of the container and for cooperating with the hopper of the container. The means for piercing the pierceable cover of the container and for cooperating with the hopper of the container are preferably a funnel presenting an outlet section smaller than the section of the opened extremity of the container vessel and bigger than the section of the container discharge outlet. The outlet section of the funnel/conduit/pipe presents generally a symmetrical form preferably a circular form. Due to these relative section differences :
- the funnel of the tank can fit into the container vessel opened extremity when piercing the container cover and
- the discharge oulet of the container can fit into the funnel of the tank, which enables the bulk material to directly flow from the container to the tank without contact with the atmosphere.

In one mode the tank can be a simple non disposable jar, the container enabling its refilling. The container is then disposed after it has refilled the jar. So the consumer does not have to rebuy a new non disposable jar : it is a gain for him since the refilling container is less expensive. It pollutes less since the refilling container can be made of recycling materials like paper: Finally the disposable refilling container can be of a light weight.

In an other mode, the tank can be the coffee powder tank of a coffee machine. This tank can be removable from the coffee machine or not. Such a tank is useful for avoiding the refilling of the machine with a coffee powder for which the coffee machine is not tuned. The filling of the machine with an other coffee is not possible.

In a third aspect, the present invention concerns a coffee machine susceptible to be refilled by a container according to the present invention, having a dosing unit presenting means for piercing the pierceable cover of the container and for cooperating with the hopper of the container. The means for piercing the pierceable cover of the container and for cooperating with the hopper of the container are preferably a funnel presenting a section smaller than the section of the opened extremity of the container vessel and bigger than the section of the container discharge outlet. The outlet section of the funnel/conduit/pipe presents generally a symmetrical form preferably a circular form. As for the tank, due to these relative section differences :
- the funnel of the coffee machine can fit into the container vessel opened extremity when piercing the container cover and
- the discharge oulet of the container can fit into the funnel of the coffee machine to be refilled, which enables the flow of the bulk material from the container to the coffee machine.

In a fourth aspect, the present invention concerns a method for refilling a tank with a container according to the present invention, said tank having a refilling opening presenting means for piercing the pierceable cover of the container and for cooperating with the hopper of the container, comprising the steps of :
- turning the container upside down so that the container pierceable cover faces the tank refilling opening,
- pushing the container against the tank refilling opening in order to break the container pierceable cover.

In the first step of the method, the container is placed upside down which means that the extremity of the container with the cover is the bottom of the container : so the bulk material is gravity oriented to the hopper and the discharge outlet inside the container. The cover faces the refilling opening of the tank. And in a second step, the operator pushes the container against the refilling opening to break the container pierceable cover and let the bulk material flows from the container through the pierced cover inside the tank. Thus, the user can easily perform the refilling operation by hand in a simple movement by turning the container upside down and pushing it against the tank to be refilled.

If the volume of the tank is at least equal to the volume of the container, then all the bulk material flows inside the tank and when it is empty, the container is disposed.

If the volume of the tank is inferior to the volume of the container, which can be the case if the tank is a small receptacle in a coffee machine cooperating with the dosing unit of the coffee machine, then the container can stay in place above the tank and be used as an expansion tank in a following step.

In a last aspect, the invention relates to the use of the container according to the present invention to refill a tank or a machine having a refilling opening, said refilling opening presenting means for piercing the pierceable cover of the container and for cooperating with the hopper of the container. The main use of the above container is refilling. Effectively, this container, that is preferably made of light and disposable materials, enables the consumers to reload either a main non-disposable tank or to directly feed a machine with the bulk material. This use is possible if the tank or the machine to be refilled present a refilling opening that cooperates with the container of the present invention. For this reason, the refilling opening presents means for piercing the pierceable cover of the container and for cooperating with the hopper of the container so that bulk material can fall from the vessel through the hopper and the refilling opening inside the tank or the machine. Preferably these means for piercing the pierceable cover of the container and for cooperating with the hopper of the container is a cylinder presenting a section smaller than the section of the opened extremity of the container vessel and bigger than the section of the container discharge outlet.

According to a first mode, the container of the present invention is used for refilling a tank. This tank can be the coffee powder tank of a coffee machine or a non disposable coffee powder jar.

According to a second mode, the container of the present invention is used for directly refilling a coffee machine, for example for a coffee machine that does not comprise a coffee powder tank. In this case, the refilling opening of the coffee machine can directly cooperates with the dosing unit of the coffee machine.

The objects of the present invention present several advantages. The containers according of the present invention enable the refilling of tanks without loss of bulk material outside the tank. Besides the containers avoid the contact of the bulk material with the atmosphere which can be of paramount importance for a material like coffee powder avoiding its loss of aroma or for hygroscopic powder. The containers of the present invention enable the refilling of a tank that present means for cooperating with said container avoiding wrong refilling of a machine tuned to prepare beverages with a specific powder.

The characteristics and advantages of the invention will be better understood in relation to the figures which follow :
- Figure 1 depicts an exploded view of the container according to the present invention.
- Figures 2 is a sectional view of one extremity of the container when it is closed.
- Figures 3a and 3b are respectively a perspective and a sectional view of a container and a tank according to the present invention before the refilling of the tank by the container.
- Figures 4a and 4b are respectively a perspective and a sectional view of a container and a tank according to the present invention during the refilling of the tank by the container.

### Detailed description of the figure.

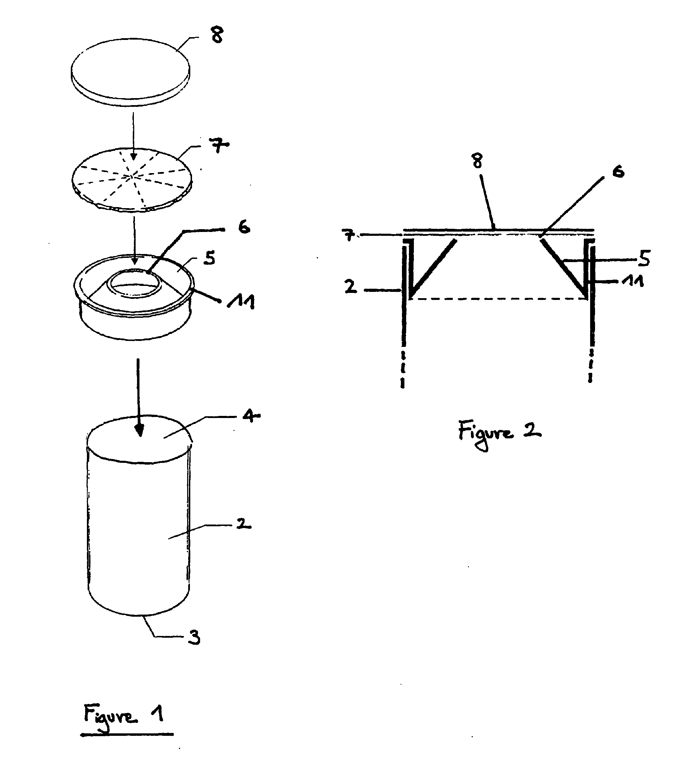

Figure 1 illustrates a container comprising a vessel 2 presenting a closed extremity 3. At the other opened extremity 4 a hopper 5 is placed inside the vessel 2, said hopper tapering to a discharge outlet 6. A pierceable cover 7 is placed above the opened extremity 4 of the vessel 2 and the discharge outlet 6. Lastly a protective cap 8 is placed above the pierceable cover 7.
Figure 2 gives a good understanding of the relative position of the different elements of the container when this one is closed. It appears clearly that the hopper 5 is placed inside the vessel 2 so that the section of discharge outlet 6 is in the same plan as the opened extremity 4 of the vessel 2. For this reason, the cover 7 placed at the opened extremity 4 of the vessel 2 closes simultanesouly the vessel 2 and the discharge outlet 6. The protection cap 8 covers the pierceable cover 7. In order to lock the position of the hopper inside the cartridge, the hopper comprises fixing means that cooperate with the wall of the vessel 2.

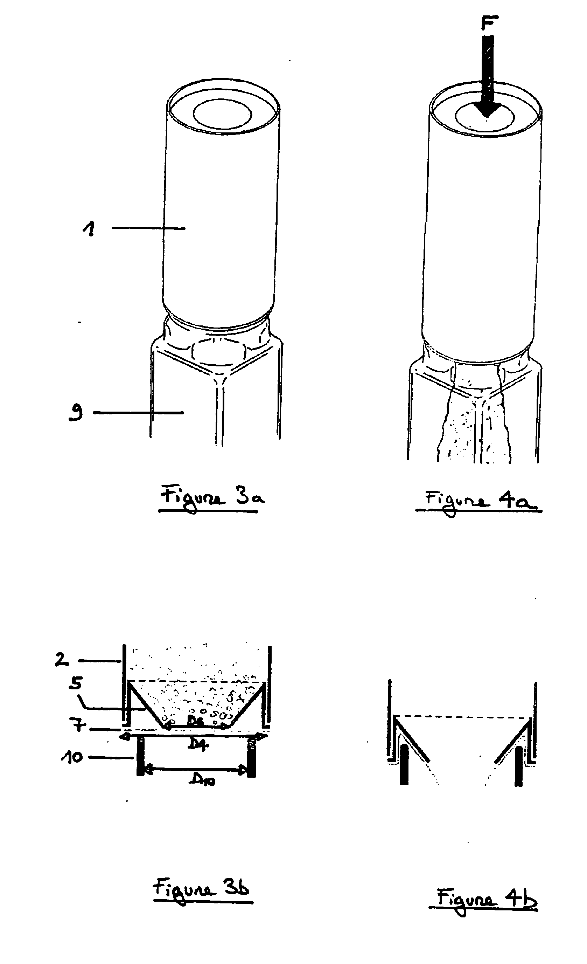

Figures 3a, 3b, 4a and 4b illustrate a method for refilling a tank with a container according to the present invention.
Figures 3a and 3b illustrate the step where the container 1 according to the present invention is placed upside down above the tank 9 to be refilled. The bulk material inside the container 1 is facing the discharge outlet of the container and is retained by the pierceable cover 7. The tank 9 presents a refilling opening presenting means 10 for piercing the pierceable cover 7 of the container and for cooperating with the hopper 5 of the container. These means 10 are a cylinder presenting a diameter D₁₀. This diameter is bigger than the diameter D₆ of the circle of the discharge outlet 6 and smaller than the diameter D₄ of the circle of the opened extremity 4 of the vessel 2.
Figures 4a and 4b illustrate the step where the container 1 is pushed by a force F against the tank refilling opening. The force F creates a pressure of the means 10 of the tank against the container pierceable cover 7 sufficient to pierce the cover. As the cover 7 breaks, the means 10 enter the vessel 2 of the container and cooperate with the hopper 5. The bulk material is then free to flow from the vessel 2 into the tank 10.

## Claims

1. Container (1) for storing and unloading bulk material comprising a vessel (2) presenting a closed extremity (3) and an opened extremity (4), **characterized in that** it comprises:
- as hopper (5) tapering to a discharge outlet (6), said hopper being placed inside the vessel (2), and
- a pierceable cover (7) closing the extremity of the discharge outlet (6) and of the opened extremity (4) of the vessel (2).

2. Container according to Claim 1 wherein the vessel (2) is a cylinder.

3. Container according to Claim 1 or 2 wherein the vessel (2) is made of at least a material chosen between : plastic, cardboard paper, aluminium or a mixture and/or laminate of the materials.

4. Container according to any of claims 1 to 3 wherein the closed extremity (3) of the vessel (2) is at least partially transparent.

5. Container according to any of claims 1 to 4 wherein the hopper presents a tapering angle α of at least 20°, preferably comprised between 40 and 45°.

6. Container according to any of claims 1 to 5 wherein the discharge outlet (4) is a cylinder.

7. Container according to any of claims 1 to 6 wherein the hopper (5) is placed inside the vessel (2) so that the extremity of the discharge outlet (6) and the opened extremity (4) of the vessel (2) are placed In the same plane.

8. Container according to any of claims 1 to 7 wherein the cover (7) is pierceable by exercising a contact pressure on its surface.

9. Container according to any of claims 1 to 8 wherein the cover (7) presents tear lines.

10. Container according to claim 9 wherein the tear lines are straight lines intersecting at the centre of the cover.

11. Container according to any of claims 1 to 10 wherein the cover (7) is made of at least a material chosen between : paper, aluminium and polymer sheets.

12. Container according to any one of previous claims comprising a protection cap (8) above the pierceable cover.

13. Container according to any one of previous claims wherein it is full of coffee powder.

14. Container according to any one of previous claims where it is disposed when it is empty.

15. Tank ((9) for storing bulk material and susceptible to be refilled by a container (1) according to any one of claims 1 to 14, said tank presenting refilling opening presenting means for piercing the pierceable cover (7) of the container and for cooperating with the hopper (5) of the container and wherein the means for piercing the pierceable cover of the container and for cooperating with the hopper of the container are a funnel (10) presenting a section smaller than the section of the opened extremity (4) of the container vessel and bigger than the section of the container discharge outlet (6).

16. Tank according to claim 15 where the tank is the coffee powder tank of a coffee machine.

17. Coffee machine susceptible to be refilled by a container according to any one of claims 1 to 14, said coffee machine having a dosing unit presenting means for piercing the pierceable cover (7) of the container and for cooperating with the hopper (5) of the container and wherein the means for piercing the pierceable cover of the container and for cooperating with the hopper of the container is a funnel (10) presenting a section smaller than the section of the opened extremity (4) of the container vessel and bigger than the section of the container discharge outlet (6).

18. Method for refilling a tank with a container according to any one of claims 1 to 14 said tank having a refilling opening presenting means for piercing the pierceable cover (7) of the container and for cooperating with the hopper (5) of the container, wherein said means for piercing the pierceable cover of the container and for cooperating with the hopper of the container is a funnel (10) presenting a section smaller than the section of the opened extremity (4) of the container vessel and bigger than the section of the container discharge outlet (6), said method comprising the steps of :
- turning the container upside down so that the container pierceable cover faces the tank refilling opening,
- pushing the container against the tank refilling opening in order to break the container pierceable cover.

19. Method according to 18 where the volume of the tank is at least equal to the volume of the container and in a following step the container is disposed.

20. Method according to Claim 18 where the volume of the tank is inferior to the volume of the container and in a following step the container is used as an expansion tank.

21. Use of the container according to any one of claims 1 to 14 to refill a tank or a machine having a refilling opening, said refilling opening presenting means for piercing the pierceable cover (7) of the container and for cooperating with the hopper (5) of the container and wherein the means for piercing the pierceable cover of the container and for cooperating with the hopper of the container is a cylinder (10) presenting a section smaller than the section of the opened extremity (4) of the container vessel and bigger than the section of the container discharge outlet (6).

22. Use according to Claim 21 where the tank is the coffee powder tank of a coffee machine.

23. Use according to Claim 21 or 22 where the tank is a non disposable coffee powder jar.

24. Use according to Claim 21where the machine is a coffee machine and the refilling opening directly cooperates with the dosing unit of the coffee machine.

## Patentansprüche

1. Container (1) zur Lagerung und Entladung von Schüttgut, der ein Gefäß (2) aufweist, das ein geschlossenes äußerstes Ende (3) und ein geöffnetes äußerstes Ende bietet, **dadurch gekennzeichnet, dass** er aufweist:
- einen Füllschacht (5), der sich zu einem Entleerungsauslass (6) verjüngt, wobei der Füllschacht im Inneren des Gefäßes (2) angeordnet ist, und
- eine durchstoßbare Abdeckung (7), die das äußerste Ende des Entleerungsauslasses (6) und das geöffnete äußerste Ende (4) des Gefäßes (2) schließt.

2. Container gemäß Anspruch 1, wobei das Gefäß (2) ein Zylinder ist.

3. Container gemäß Anspruch 1 oder 2, wobei das Gefäß (2) aus wenigstens einem Material gefertigt ist, das ausgewählt wird aus: Kunststoff, Karton, Aluminium oder einer Mischung und/oder einem Laminat der Materialien.

4. Container gemäß einem der Ansprüche 1 bis 3, wobei das geschlossene äußerste Ende (3) des Gefäßes (2) wenigstens teilweise transparent ist.

5. Container gemäß einem der Ansprüche 1 bis 4, wobei der Trichter einen Verjüngungswinkel α von wenigstens 20°, der bevorzugt zwischen 40 und 45° liegt, bietet.

6. Container gemäß einem der Ansprüche 1 bis 5, wobei der Entleerungsauslass (4) ein Zylinder ist.

7. Container gemäß einem der Ansprüche 1 bis 6, wobei der Füllschacht (5) im Inneren des Gefäßes (2) angeordnet ist, so dass das äußerste Ende des Entleerungsauslasses (6) und das geöffnete äußerste Ende (4) des Gefäßes (2) in der gleichen Ebene angeordnet sind.

8. Container gemäß einem der Ansprüche 1 bis 7, wobei die Abdeckung (7) durchstoßbar ist, indem ein Kontaktdruck auf ihre Oberfläche ausgeübt wird.

9. Container gemäß einem der Ansprüche 1 bis 7, wobei die Abdeckung (7) Sollbruchlinien bietet.

10. Container gemäß Anspruch 9, wobei die Sollbruchlinien Geraden sind, die sich in der Mitte der Abdeckung schneiden.

11. Container gemäß einem der Ansprüche 1 bis 10, wobei die Abdeckung (7) aus wenigstens einem Material gefertigt ist, das ausgewählt wird aus: Papier, Aluminium und Polymerfolien.

12. Container gemäß einem der vorhergehenden Ansprüche, das eine Schutzkappe (8) über der durchstoßbaren Abdeckung aufweist.

13. Container nach einem der vorhergehenden Ansprüche, der voll mit Kaffeepulver ist.

14. Container nach einem der vorhergehenden Ansprüche, der weggeworfen wird, wenn er leer ist.

15. Behälter (9) zum Lagern von Schüttgut, der fähig ist, von einem Container (1) gemäß einem der Ansprüche 1 bis 14 wieder aufgefüllt zu werden, wobei der Behälter eine Wiederauffüllöffnung bietet, die Mittel zum Durchstoßen der durchstoßbaren Abdeckung (7) des Containers und zum Zusammenwirken mit dem Füllschacht (5) des Containers bietet, und wobei die Mittel zum Durchstoßen der durchstoßbaren Abdeckung des Containers und zum Zusammenwirken mit dem Füllschacht des Containers ein Trichter (10) ist, der einen kleineren Abschnitt als den Abschnitt des geöffneten äußersten Endes (4) des Containergefäßes und einen größeren Abschnitt als den Abschnitt des Containerentleerungsauslasses (6) bietet.

16. Behälter gemäß Anspruch 15, wobei der Behälter ein Kaffeepulverbehälter einer Kaffeemaschine ist.

17. Kaffeemaschine, die fähig ist, durch einen Container gemäß einem der Ansprüche 1 bis 14 wieder aufgefüllt zu werden, wobei die Kaffeemaschine eine Dosiereinheit hat, die eine Einrichtung zum Durchstoßen der durchstoßbaren Abdeckung (7) des Containers und zum Zusammenwirken mit dem Füllschacht (5) des Containers bietet, und wobei die Mittel zum Durchstoßen der durchstoßbaren Abdeckung des Containers und zum Zusammenwirken mit dem Füllschacht des Containers ein Trichter (10) ist, der einen kleineren Abschnitt als den Abschnitt des geöffneten äußersten Endes (4) des Containergefäßes (4) und einen größeren Abschnitt als den Abschnitt des Containerentleerungsauslasses (6) bietet.

18. Verfahren zum Wiederauffüllen eines Behälters mit einem Container nach einem der Ansprüche 1 bis 14, wobei der Behälter eine Wiederauffüllöffnung hat, die Mittel zum Durchstoßen der durchstoßbaren Abdeckung (7) des Containers und zum Zusammenwirken mit dem Füllschacht (5) des Containers bietet, wobei die Mittel zum Durchstoßen der durchstoßbaren Abdeckung des Containers und zum Zusammenwirken mit dem Füllschacht des Containers ein Trichter (10) ist, der einen kleineren Abschnitt als den Abschnitt des geöffneten äußersten Endes (4) des Containergefäßes und einen größeren Abschnitt als den Abschnitt des Containerentleerungsauslasses (6) bietet, wobei das Verfahren die folgenden Schritte aufweist:
- Umdrehen des Containers, so dass die durchlochbare Abdeckung der Behälterwiederauffiillöffnung zugewandt ist,
- Drücken des Containers gegen die Behälterwiederauffiillöffnung, um die durchlochbare Containerabdeckung zu zerreißen.

19. Verfahren gemäß Anspruch 18, wobei das Volumen des Behälters wenigstens gleich dem Volumen des Containers ist und der Container in einem folgenden Schritt weggeworfen wird.

20. Verfahren nach Anspruch 18, wobei das Volumen des Behälters geringer als das Volumen des Containers ist und der Container in einem folgenden Schritt als ein Erweiterungsbehälter verwendet wird.

21. Verwendung des Behälters gemäß einem der Ansprüche 1 bis 14 zum Wiederauffüllen eines Behälters oder einer Maschine mit einer Wiederauffiillöffnung, wobei die Wiederauffiillöffnung Mittel zum Durchstoßen der durchstoßbaren Abdeckung (7) des Containers und zum Zusammenwirken mit dem Füllschacht (5) des Containers bietet, und wobei die Mittel zum Durchstoßen der durchstoßbaren Abdeckung des Containers und zum Zusammenwirken mit dem Füllschacht des Containers ein Zylinder (10) ist, der einen kleineren Abschnitt als den Abschnitt des geöffneten äußersten Endes (4) des Containergefäßes und einen größeren Abschnitt als den Abschnitt des Containerentleerungsauslasses (6) bietet.

22. Verwendung gemäß Anspruch 21, wobei der Behälter der Kaffeepulverbehälter einer Kaffeemaschine ist.

23. Verwendung gemäß Anspruch 21 oder 22, wobei der Behälter eine Kaffeepulverdose zur Mehrfachverwendung ist.

24. Verwendung gemäß Anspruch 21, wobei die Maschine eine Kaffeemaschine ist und die Wiederauffüllöffnung direkt mit der Dosiereinheit der Kaffeemaschine zusammenwirkt.

## Revendications

1. Récipient pour le stockage et le déchargement de matériaux en vrac comprenant un contenant (2) présentant une extrémité fermée (3) et une extrémité ouverte (4),
**caractérisé en ce qu'**
il comprend :
- une trémie (5) qui se rétrécit en un orifice d'évacuation (6), ladite trémie étant placée à l'intérieur du contenant (2), et
- un couvercle (7) perçable fermant l'extrémité de l'orifice d'évacuation (6) et l'extrémité ouverte (4) du contenant (2).

2. Récipient selon la revendication 1,
le contenant (2) étant un cylindre.

3. Récipient selon l'une des revendications 1 ou 2,
le contenant (2) étant fabriqué en au moins un matériau choisi parmi : le plastique, le carton, l'aluminium ou un mélange et/ou un stratifié des matériaux.

4. Récipient selon l'une des revendications 1 à 3,
l'extrémité fermée (3) du contenant (2) étant au moins partiellement transparente.

5. Récipient selon l'une des revendications 1 à 4,
la trémie (5) présentant un angle de rétrécissement α d'au moins 20°, compris préférablement entre 40 et 45°.

6. Récipient selon l'une des revendications 1 à 5,
l'orifice d'évacuation (4) étant un cylindre.

7. Récipient selon l'une des revendications 1 à 6,
la trémie (5) étant placée à l'intérieur du contenant (2) de manière à ce que l'extrémité de l'orifice d'évacuation (6) et l'extrémité ouverte (4) du contenant (2) soient placées dans le même plan.

8. Récipient selon l'une des revendications 1 à 7,
le couvercle (7) étant perçable en exerçant une pression de contact sur sa surface.

9. Récipient selon l'une des revendications 1 à 8,
le couvercle (7) présentant des lignes destinées à la rupture.

10. Récipient selon la revendication 9,
les lignes destinées à la rupture étant des lignes droites qui se coupent au milieu du couvercle.

11. Récipient selon l'une des revendications 1 ou 10,
le couvercle (7) étant fabriqué en au moins un matériau choisi parmi des feuilles de papier, d'aluminium et de polymère.

12. Récipient selon l'une des revendications précédentes,
comprenant un bouchon de protection (8) au-dessus du couvercle perçable.

13. Récipient selon l'une des revendications précédentes,
rempli de poudre de café.

14. Récipient selon l'une des revendications précédentes,
qui est jeté lorsqu'il est vide.

15. Réservoir (9) pour stocker des matériaux en vrac et adapté à être rempli de nouveau par un récipient (1) selon l'une des revendications 1 à 14,
ledit réservoir présentant une ouverture de re-remplissage présentant des moyens pour percer le couvercle perçable (7) du récipient et pour coopérer avec la trémie (5) du récipient et dans lequel les moyens pour percer le couvercle perçable du récipient et pour coopérer avec le trémie du récipient sont un entonnoir (10) présentant une section plus petite que la section de l'extrémité ouverte (4) du contenant du récipient et plus grande que la section de l'orifice d'évacuation (6) du récipient.

16. Réservoir selon la revendication 15,
le réservoir étant le réservoir à poudre de café d'une machine à café.

17. Machine à café adaptée à être re-remplie par un récipient selon l'une des revendications 1 à 14,
ladite machine à café ayant une unité de dosage présentant des moyens pour percer le couvercle perçable (7) du récipient et pour coopérer avec la trémie (5) du récipient et les moyens pour percer le couvercle perçable du récipient et pour coopérer avec la trémie du récipient sont un entonnoir (10) présentant une section plus petite que la section de l'extrémité ouverte (4) du contenant du récipient et plus grande que la section de l'orifice d'évacuation (6) du récipient.

18. Procédé de re-remplissage d'un réservoir avec un récipient selon l'une des revendications 1 à 14,
ledit réservoir présentant une ouverture de re-remplissage présentant des moyens pour percer le couvercle perçable (7) du récipient et pour coopérer avec la trémie (5) du récipient, et lesdits moyens pour percer le couvercle perçable du récipient et pour coopérer avec le trémie du récipient sont un entonnoir (10) présentant une section plus petite que la section de l'extrémité ouverte (4) du contenant du récipient et plus grande que la section de l'orifice d'évacuation (6) du récipient,
ledit procédé comprenant les étapes consistant à :
- retourner le récipient de sorte que le couvercle perçable du récipient fait face à l'ouverture de re-remplissage du réservoir,
- pousser le récipient contre l'ouverture de re-remplissage du réservoir pour perforer le couvercle perçable du récipient.

19. Procédé selon la revendication 18,
le volume du réservoir étant au moins égal au volume du récipient et, dans une étape suivante, le récipient étant jeté.

20. Procédé selon la revendication 18,
le volume du réservoir étant inférieur au volume du récipient et, dans une étape suivante, le récipient étant utilisé comme réservoir d'expansion.

21. Utilisation d'un récipient selon l'une des revendications 1 à 14 pour re-remplir un réservoir ou une machine ayant une ouverture de re-remplissage, ladite ouverture de re-remplissage présentant des moyens pour percer le couvercle perçable (7) du récipient et pour coopérer avec la trémie (5) du récipient et les moyens pour percer le couvercle perçable du récipient et pour coopérer avec le trémie du récipient sont un entonnoir (10) présentant une section plus petite que la section de l'extrémité ouverte (4) du contenant du récipient et plus grande que la section de l'orifice d'évacuation (6) du récipient.

22. Utilisation selon la revendication 21,
le réservoir étant un réservoir à poudre de café ou une machine à café.

23. Utilisation selon la revendication 21 ou 22,
le réservoir étant un bocal de poudre de café non-jetable.

24. Utilisation selon la revendication 21,
la machine étant une machine à café et l'ouverture de re-remplissage coopérant directement avec l'unité de dosage de la machine à café.
